# EUROPÄISCHE PATENTSCHRIFT

(11) **EP 2 497 179 B1**
(45) Veröffentlichungstag und Bekanntmachung des Hinweises auf die Patenterteilung: **31.07.2013**
(21) Anmeldenummer: 10821462.8
(22) Anmeldetag: 21.09.2010
(51) Int. Cl.: B60L 11/18, H01M 10/44, H01M 10/46, H02M 1/00, H02J 7/00

(54) **BATTERIESYSTEM MIT DC/DC-UMSETZERN**
BATTERY SYSTEM WITH DC/DC CONVERTERS
SYSTÈME DE BATTERIE À CONVERTISSEURS CONTINU-CONTINU

(30) Priorität: 06.11.2009 DE 102009046501
(43) Veröffentlichungstag der Anmeldung: 12.09.2012
(73) Patentinhaber: Samsung SDI Co., Ltd., Gyeonggi-do (KR); Robert Bosch GmbH, 70442 Stuttgart (DE)
(72) Erfinder: BUTZMANN, Stefan, 71717 Beilstein (DE)
(74) Vertreter: Bee, Joachim
(86) Internationale Anmeldenummer: PCT/EP2010/063836
(87) Internationale Veröffentlichungsnummer: WO 2011/054583

(56) Entgegenhaltungen:
- EP-A2- 2 043 218
- US-A1- 2005 194 937
- US-A1- 2008 150 366

## Beschreibung

### Stand der Technik

Es besteht ein wachsender Bedarf an Batteriesystemen, welche in stationären Anwendungen wie Windkraftanlagen und Notstromsystemen oder aber in Fahrzeugen zum Einsatz kommen sollen. Alle diese Anforderungen stellen hohe Anforderungen an die Zuverlässigkeit und Ausfallsicherheit. Der Grund hierfür ist, dass ein vollständiger Ausfall der Spannungsversorgung durch das Batteriesystem zu einem Ausfall des Gesamtsystems führen kann. So werden bei Windkraftanlagen Batterien eingesetzt, um bei starkem Wind die Rotorblätter zu verstellen und die Anlage so vor übermäßigen mechanischen Belastungen zu schützen, die die Windkraftanlage beschädigen oder sogar zerstören können. Im Falle des Ausfalls der Batterie eines Elektroautos würde dieses fahruntüchtig. Ein Notstromsystem wiederum soll gerade den unterbrechungsfreien Betrieb z.B. eines Krankenhauses sicherstellen und daher selbst möglich nicht ausfallen können.

Um die für die jeweilige Anwendung geforderte Leistung und Energie zur Verfügung stellen zu können, werden einzelne Batteriezellen in Serie und teilweise zusätzlich parallel geschaltet. In Batterien für praktische Anwendungen werden eine Vielzahl von Batteriezellen in Serie geschaltet, wie etwa aus EP 0568339 B1 bekannt, um die beispielsweise in einem Kraftfahrzeug mit elektrischem Antriebsmotor für den Antriebsmotor erforderliche hohe Betriebsspannung durch Summierung der Spannung der Einzelzellen zu erreichen. Da der gesamte Ausgangsstrom der Batterie aufgrund der Serienschaltung der Batteriezellen in jeder der Batteriezellen fließt, wobei der Ladungstransport durch elektrochemikalische Prozesse innerhalb der Batteriezellen geschieht, bedeutet der Ausfall einer einzigen Batteriezelle im Extremfall, dass die Gesamtanordnung keinen Strom und damit keine elektrische Energie mehr bereitstellen kann. Zudem bedeutet dies, dass es nicht möglich ist, die einzelnen Batteriezellen angepasst an ihren jeweili gen Zustand (Ladungszustand, Temperatur, Alterung) betrieben werden können. Ein weiterer Nachteil der reinen Serienschaltung von Batteriezellen ist, dass die Ausgangsspannung der Batterie vom Ladungszustand der Batteriezellen abhängt und somit veränderlich ist. Es wäre jedoch von erheblichem Vorteil, wenn die Batterie eine möglichst konstante Ausgangsspannung liefern würde, da die folgenden leistungselektronischen Systemkomponenten wie beispielsweise Wechselrichter oder Antriebsmotor dann wesentlich kostengünstiger und mit besserem Wirkungsgrad für diese Ausgangsspannung ausgelegt werden können.

In US 2008/150366 A1 wird ein Batteriesystem mit einer Mehrzahl von Gruppen von in Serie geschalteten Batteriezellen beschrieben, wobei zusätzlich eine Mehrzahl von DC/DC-Umsetzern vorgesehen ist, welche eingangsseitig mit einem ersten Pol und einem zweiten Pol einer dem jeweiligen DC/DC-Umsetzer zugeordneten Gruppe von Batteriezellen verbunden und ausgangsseitig zwischen einem ersten Ausgang des Batteriesystems und einem zweiten Ausgang des Batteriesystems in Serie geschaltet sind. Mit dieser Vorrichtung ist es jedoch nicht möglich, jede Gruppe von Batteriezellen unabhängig von den anderen Gruppen zu belasten und alle Batteriezellen gleichzeitig aufzuladen, wenn eine Aufladespannung verfügbar ist.

### Offenbarung der Erfindung

Die Erfindung macht es sich zur Aufgabe, eine Vorrichtung einzuführen, die die obengenannten Nachteile des Standes der Technik überwinden kann. Die Erfindung führt daher ein Batteriesystem mit einer Mehrzahl von Gruppen von in Serie geschalteten Batteriezellen, einer Mehrzahl von DC/DC-Umsetzern und einem ersten Schalter ein. Die Gruppen von in Serie geschalteten Batteriezellen sind ihrerseits wiederum in Serie geschaltet. Die DC/DC-Umsetzer sind eingangsseitig mit einem ersten Pol und einem zweiten Pol einer dem jeweiligen DC/DC-Umsetzer zugeordneten Gruppe von Batteriezellen verbunden und ausgangsseitig zwischen einem ersten Ausgang des Batteriesystems und einem zweiten Ausgang des Batteriesystems in Serie geschaltet. Der erste Schalter ist in einen ersten Strompfad zwischen dem ersten Pol einer ersten Gruppe von Batteriezellen und dem ersten Ausgang des Batteriesystems geschaltet und weist einen mit einem Kontroller verbundenen Steuereingang für ein erstes Steuersignal auf. Der erste Schalter ist ausgebildet, den ersten Pol der ersten Gruppe von Batteriezellen mit dem ersten Ausgang des Batteriesystems auf das erste Steuersignal hin zu verbinden.

Eine Gruppe kann dabei eine oder mehrere Batteriezellen enthalten.

Die Erfindung vereint eine Reihe von Vorteilen. Durch den Einsatz der DC/DC-Umsetzer wird es möglich, jede Gruppe von Batteriezellen unabhängig von den anderen zu betreiben. Obwohl die Gruppen von Batteriezellen ihrerseits wiederum in Serie geschaltet sind, fließt nicht mehr durch jede Batteriezelle (bzw. Gruppe von Batteriezellen) derselbe Strom, da der Strom über die DC/DC-Umsetzer ausgegeben wird. Dabei kann jede Gruppe von Batteriezellen z.B. abhängig vom jeweiligen Ladezustand unabhängig von den anderen Gruppen belastet werden. Dennoch können alle Batteriezellen wegen der Serienschaltung gleichzeitig aufgeladen werden, wenn an die ersten und zweiten Ausgänge des Batteriesystems eine Aufladespannung angelegt wird. Ein weiterer Vorteil ist, dass die DC/DC-Umsetzer nur für eine im typischen Anwendungsfall benötigte Ausgangsleistung ausgelegt werden müssen. Wird eine größere Ausgangsleistung benötigt, können die seriengeschalteten Batteriezellen direkt mit den Ausgängen des Batteriesystems verbunden und die maximale Ausgangsleistung der Batteriezellen zur Verfügung gestellt werden. Zudem wird es gegenüber vergleichbaren Ansätzen möglich, die Ausgangsspannung der ausgangsseitig seriengeschalteten DC/DC-Umsetzer gleich oder niedriger als die Gesamtspannung der seriengeschalteten Batteriezellen zu wählen, was es erlaubt, die DC/DC-Umsetzer mit einem besonders guten Wirkungsgrad zu implementieren. In einigen bevorzugten Ausführungsformen der Erfindung wird jedoch die Ausgangsspannung der DC/DC-Umsetzer bewusst höher gewählt, so dass dieser Vorteil optional verwirklicht werden kann.

Die Ausgänge der DC/DC-Umsetzer sind von den Ausgängen der DC/DC-Umsetzer bevorzugt galvanisch isoliert. Dadurch wird die ausgangsseitige Hochspannung der Gesamtanordnung von der deutlich niedrigeren Spannung der Batteriezellen einer Gruppe von Batteriezellen abgetrennt und ein modularisierter Aufbau mit einzeln herausnehmbaren Batteriemodulen vereinfacht. Dabei können die DC/DC-Umsetzer als Flyback, Half-Bridge, Full-Bridge oder transformatorbasierte Resonanz-Konverter ausgeführt sein.

Bei einer bevorzugten Ausgestaltung der Erfindung sind die DC/DC-Umsetzer ausgebildet, eine erste Ausgangsleistung auszugeben, und die Batteriezellen, eine zweite Ausgangsleistung, größer als die erste Ausgangsleistung auszugeben. Der Kontroller ist dabei ausgebildet, das erste Steuersignal an den Steuereingang des ersten Schalters auszugeben, wenn eine geforderte Gesamtausgangsleistung des Batteriesystems größer als die erste Ausgangsleistung ist. Wie bereits oben erläutert, können die seriengeschalteten Batteriezellen eine größere Ausgangsleistung bereitstellen als die seriengeschalteten DC/DC-Umsetzer. Wird eine größere Ausgangsleistung benötigt, als die DC/DC-Umsetzer maximal zur Verfügung stellen können, schaltet der Kontroller die Batteriezellen über den ersten Schalter direkt zwischen die Ausgänge des Batteriesystems, wodurch die benötigte größere Leistung zur Verfügung gestellt wird.

Die DC/DC-Umsetzer sind bevorzugt unidirektional ausgeführt. Ein Vorteil der Erfindung ist, dass die Batteriezellen über den ersten Schalter aufgeladen werden können. Daher ist es in besonders kostengünstigen und leichten Ausführungen der Erfindung möglich, auf bidirektionale DC/DC-Umsetzer, also DC/DC-Umsetzer, die elektrische Energie in beiden Richtungen zwischen ihren Anschlüssen übertragen können, zu verzichten, da die DC/DC-Umsetzer nicht für die Aufladung der Batteriezellen erforderlich sind. Unidirektionale DC/DC-Umsetzer, also solche, die elektrische Energie nur von den Batteriezellen zum Ausgang der DC/DC-Umsetzer übertragen können, können leichter und kostengünstiger produziert werden mit entsprechenden Vorteilen für das Batteriesystem.

Eine Ausführungsform des erfindungsgemäßen Batteriesystems kann eine erste Diode aufweisen, welche in einen zum ersten Strompfad parallelen zweiten Strompfad und in Durchlassrichtung für einen Aufladestrom für die Batteriezellen geschaltet ist. Dadurch wird es möglich, die Batteriezellen auch bei geöffnetem ersten Schalter aufzuladen, was die Steuerung des Batteriesystems vereinfacht. Die erste Diode kann dabei eine Substrat- oder "Body"-Diode des ersten Schalters sein.

Dabei kann bei dem Batteriesystem der erste Strompfad eine mit dem ersten Schalter in Serie geschaltete zweite Diode und der zweite Strompfad einen mit der ersten Diode in Serie geschalteten zweiten Schalter aufweisen, wobei die zweite Diode in eine Durchlassrichtung für einen Entladestrom der Batteriezellen geschaltet ist. In einer solchen Anordnung ist es einfach möglich, einen Strom abhängig von seiner Richtung zu schalten. Es sind dafür mehrere Schalteranordnungen im Stand der Technik bekannt. So kann z.B. die zweite Diode ebenfalls als Substratdiode (des zweiten Schalters) ausgeführt werden, wobei der erste Schalter und der zweite Schalter in Serie geschaltet werden und die jeweiligen Substratdioden in unterschiedliche Richtungen weisen. Ein Strom einer bestimmten Richtung bzw. Vorzeichens kann dann jeweils einen der Schalter durch dessen Substratdiode unabhängig von dessen Schaltzustand "umgehen", während der jeweils andere der Schalter nur durchflossen werden kann, wenn er auch tatsächlich durchgeschaltet wird. Alternativ können z.B. der erste Schalter und die erste Diode in einem parallelen Strompfad zum zweiten Schalter und der zweiten Diode angeordnet werden.

Bei einer bevorzugten Ausführungsform der Erfindung ist eine Gesamtausgangsspannung der ausgangsseitig in Serie geschalteten DC/DC-Umsetzer größer als eine Batteriespannung der in Serie geschalteten Batteriezellen einstellbar. Dabei ist der Kontroller ausgebildet, eine Ausgangsleistung eines jeden DC/DC-Umsetzers gesondert vorzugeben. Wie bereits erläutert, bietet die gesonderte Vorgabe der jeweiligen Ausgangsleistung der DC/DC-Umsetzer den Vorteil, dass die an den jeweiligen DC/DC-Umsetzer angeschlossene Gruppe von Batteriezellen abhängig von ihrem jeweiligen Ladezustand, Alterungszustand usw. belastet werden kann. Kann zudem die Ausgangsspannung der seriengeschalteten DC/DC-Umsetzer größer als die Spannung aller Batteriezellen eingestellt werden, wird es möglich, einen Strom aus den Batteriezellen über den ersten Schalter wieder in die Batteriezellen zurückzuführen. Da der Aufladestrom für alle Batteriezellen gleich ist, jede Gruppe von Batteriezellen jedoch unterschiedlich belastet werden kann, wird es möglich, ein sogenanntes Cell-Balancing durchzuführen. Unter "Cell-Balancing" versteht man das Angleichen des Ladezustandes der einzelnen Batteriezellen, um eine Reihe von Problemen, die bis zur Zerstörung des Batteriesystems gehen können, zu vermeiden. Die Erfindung bietet hierbei die Vorteile, dass einzelne Batteriezellen, die einen höheren Ladezustand aufweisen als andere, nicht nur entladen, sondern die entnommene Energie auch noch nahezu verlustfrei anderen Batteriezellen zugeführt werden kann. Im Rahmen des Cell-Balancings entnimmt also ein DC/DC-Umsetzer, der einer Gruppe von Batteriezellen mit einem höheren Ladezustand zugeordnet ist, dieser Gruppe von Batteriezellen mehr elektrische Energie als die anderen DC/DC-Umsetzer und stellt diese ausgangsseitig zur Verfügung. Die von allen DC/DC-Umsetzern ausgangsseitig zur Verfügung gestellte elektrische Energie fließt als Aufladestrom wiederum in alle Batteriezellen zurück, wobei jedoch in der Summe über die Entnahme und das Aufladen Energie von der Gruppe von Batteriezellen mit einem höheren Ladezustand Energie an andere Batteriezellen übertragen wird. Ein zweiter Aspekt der Erfindung betrifft ein Kraftfahrzeug mit einem elektrischen Antriebsmotor zum Antreiben des Kraftfahrzeuges und einem mit dem elektrischen Antriebsmotor verbundenen Batteriesystem gemäß dem ersten Erfindungsaspekt.

### Kurzbeschreibung der Abbildungen

Die Erfindung wird im folgenden anhand von Abbildungen von Ausführungsbeispielen näher erläutert. Dabei bezeichnen gleiche Bezugszeichen gleiche oder gleichartige Komponenten. Es zeigen:
Fig. 1 ein erstes Ausführungsbeispiel der Erfindung;
Fig. 2 ein zweites Ausführungsbeispiel der Erfindung;
Fig. 3 ein drittes Ausführungsbeispiel der Erfindung; und
Fig. 4 ein viertes Ausführungsbeispiel der Erfindung.

### Ausführliche Beschreibung der Abbildungen

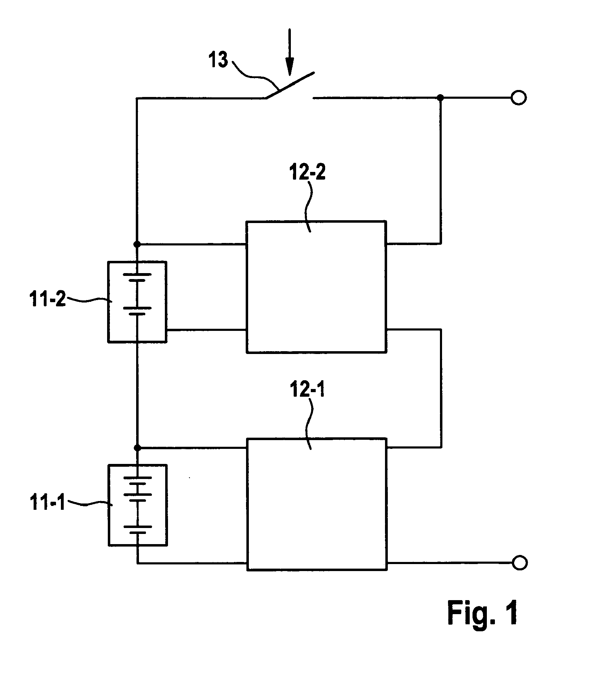

Fig. 1 zeigt ein erstes Ausführungsbeispiel der Erfindung. Das Batteriesystem besitzt mehrere in Serie geschalteten Batteriezellen, welche sich im gezeigten Beispiel in zwei Gruppen 11-1 und 11-2 gliedern. Jede Gruppe 11-1, 11-2 kann eine oder mehrere in Serie geschaltete Batteriezellen enthalten. Die Anzahl von Gruppen kann jedoch für alle Ausführungsbeispiele beliebig gewählt werden und ist nicht auf zwei beschränkt. Die Gruppen von Batteriezellen 11-1 und 11-2 sind jeweils mit einem zugeordneten DC/DC-Umsetzer 12-1, 12-2 verbunden, welche ihrerseits ausgangsseitig in Serie geschaltet sind, so dass sich die Gesamtspannung des Batteriesystems als Summe der Ausgangsspannungen der einzelnen DC/DC-Umsetzer 12-1, 12-2 ergibt. Ein erster Schalter 13 ist zwischen einem Pol der Batteriezellen und einem Ausgang des Batteriesystems geschaltet und dient dazu, die Batteriezellen für den Fall des Aufladens oder eines besonders hohen benötigten Ausgangsleistung direkt mit den Ausgängen des Batteriesystems zu verbinden. Im gezeigten Beispiel ist der erste Schalter 13 zwischen den positiven Pol der Batteriezellen und den positiven Ausgang des Batteriesystems geschaltet, ebenso gut könnte der erste Schalter 13 aber auch zwischen den negativen Pol der Batteriezellen und den negativen Ausgang des Batteriesystems geschaltet sein. Selbstverständlich können auch zwei erste Schalter 13 an beiden Polen des Batteriesystems vorgesehen sein.

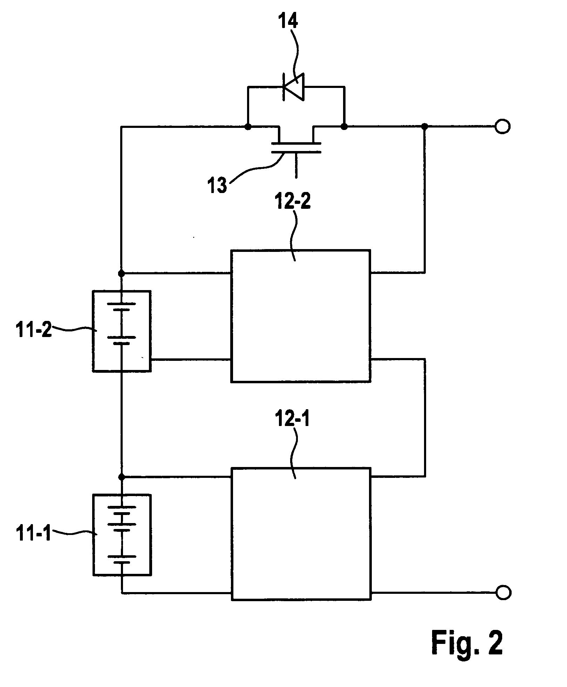

Fig. 2 zeigt ein zweites Ausführungsbeispiel der Erfindung. Das zweite Ausführungsbeispiel entspricht im wesentlichen dem ersten Ausführungsbeispiel. Der erste Schalter 13 ist hier als MOS-Transistor ausgeführt. In einem parallelen zweiten Strompfad ist eine erste Diode 14 geschaltet, welche einen Ladestrom für die Batteriezellen unabhängig vom Schaltzustand des ersten Schalters 13 fließen lässt, sofern die Ausgangsspannung des Batteriesystems größer ist als die Gesamtspannung der seriengeschalteten Batteriezellen. Dies kann, wie schon erwähnt, im Rahmen eines Cell-Balancing-Verfahrens oder im Generatorbetrieb z.B. beim Abbremsen eines mit einem solchen Batteriesystem ausgestatteten Kraftfahrzeuges geschehen.

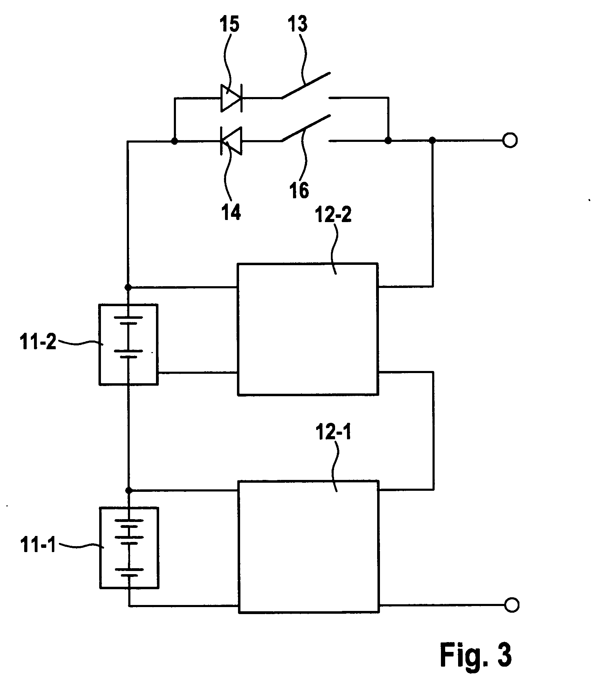

Fig. 3 zeigt ein drittes Ausführungsbeispiel der Erfindung, welches wiederum im wesentlichen den anderen gezeigten Ausführungsbeispielen entspricht. Bei dem Ausführungsbeispiel der Fig. 3 weist jeder der beiden Strompfade eine Diode 14, 15, welche in entgegengesetzte Richtungen geschaltet sind, und einen Schalter 13, 16 auf. Die Dioden 14, 15 lassen im jeweiligen Strompfad nur einen Strom in Durchlassrichtung der Diode 14, 15 zu, welcher abhängig vom Schaltzustand des der Diode 14, 15 zugeordneten Schalters 13, 16 fließt oder gesperrt wird.

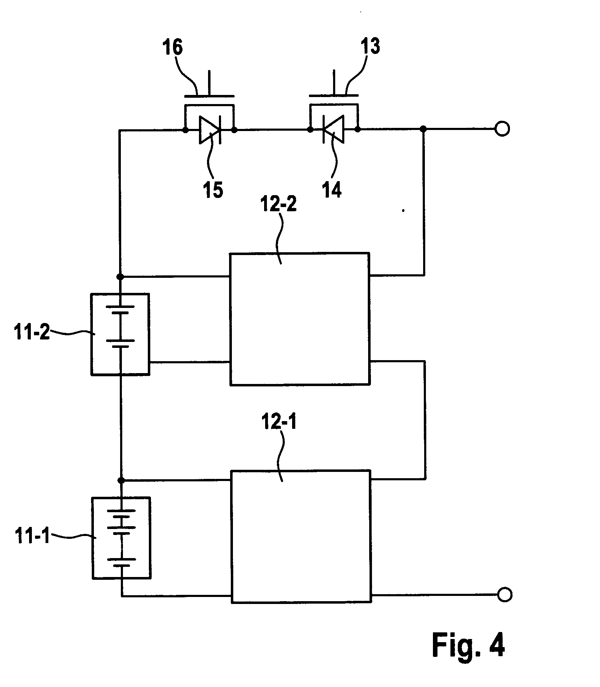

Fig. 4 zeigt ein viertes Ausführungsbeispiel der Erfindung, welches eine alternative Ausführungsform des dritten Ausführungsbeispiels darstellt. Hierbei sind zwei Schalter 13, 16 in Serie geschaltet, wobei jedem der Schalter 13, 16 eine Diode 14 bzw. 15 parallelgeschaltet ist. Die Dioden 14, 15 können als Body-Dioden der Schalter 13, 16 ausgeführt sein und sind wiederum entgegengesetzt ausgerichtet. Auch in dieser Anordnung kann jeder der Schalter 13, 16 Strom eines bestimmten Vorzeichens schalten, so dass eine unabhängige Kontrolle von Lade-und Entladeströmen des Batteriesystems möglich ist.

## Patentansprüche

1. Ein Batteriesystem eines Kraftfahrzeugs mit einer Mehrzahl von Gruppen (11-1, 11-2) von in Serie geschalteten Batteriezellen und einer Mehrzahl von DC/DC-Umsetzern (12-1, 12-2), welche eingangsseitig mit einem ersten Pol und einem zweiten Pol einer dem jeweiligen DC/DC-Umsetzer (12-1, 12-2) zugeordneten Gruppe (11-1, 11-2) von Batteriezellen verbunden und ausgangsseitig zwischen einem ersten Ausgang des Batteriesystems und einem zweiten Ausgang des Batteriesystems in Serie geschaltet sind,
**dadurch gekennzeichnet, dass**
die Gruppen (11-1, 11-2) ihrerseits in Serie geschaltet sind, und dass das Batteriesystem einen in einen ersten Strompfad zwischen dem ersten Pol einer ersten Gruppe (11-2) von Batteriezellen und dem ersten Ausgang des Batteriesystems geschalteten ersten Schalter (13) aufweist, welcher einen mit einem Kontroller verbundenen Steuereingang für ein erstes Steuersignal aufweist und ausgebildet ist, den ersten Pol der ersten Gruppe (11-2) von Batteriezellen mit dem ersten Ausgang des Batteriesystems auf das erste Steuersignal hin zu verbinden.

2. Das Batteriesystem von Anspruch 1, bei dem die Ausgänge der DC/DC-Umsetzer (12-1, 12-2) von den Ausgängen der DC/DC-Umsetzer (12-1, 12-2) galvanisch isoliert sind.

3. Das Batteriesystem von Anspruch 2, bei dem die DC/DC-Umsetzer (12-1, 12-2) als Flyback, Half-Bridge, Full-Bridge oder transformatorbasierte Resonanz-Konverter ausgeführt sind.

4. Das Batteriesystem nach einem der vorhergehenden Ansprüche, bei dem die DC/DC-Umsetzer (12-1, 12-2) ausgebildet sind, eine erste Ausgangsleistung auszugeben, und bei dem die Batteriezellen ausgebildet sind, eine zweite Ausgangsleistung, größer als die erste Ausgangsleistung auszugeben, wobei der Kontroller ausgebildet ist, das erste Steuersignal an den Steuereingang des ersten Schalters (13) auszugeben, wenn eine geforderte Gesamtausgangsleistung des Batteriesystems größer als die erste Ausgangsleistung ist.

5. Das Batteriesystem von einem der vorhergehenden Ansprüche, bei dem die DC/DC-Umsetzer (12-1, 12-2) unidirektional ausgeführt sind.

6. Das Batteriesystem von einem der vorhergehenden Ansprüche, mit einer ersten Diode (14), welche in einen zum ersten Strompfad parallelen zweiten Strompfad und in Durchlassrichtung für einen Aufladestrom für die Batteriezellen geschaltet ist.

7. Das Batteriesystem von Anspruch 6, bei dem der erste Strompfad eine mit dem ersten Schalter (13) in Serie geschaltete zweite Diode (15) und bei dem der zweite Strompfad einen mit der ersten Diode (14) in Serie geschalteten zweiten Schalter (16) aufweist, wobei die zweite Diode (15) in eine Durchlassrichtung für einen Entladestrom der Batteriezellen geschaltet ist.

8. Das Batteriesystem von einem der Ansprüche 1 bis 5, bei dem eine Gesamtausgangsspannung der ausgangsseitig in Serie geschalteten DC/DC-Umsetzer (12-1, 12-2) größer als eine Batteriespannung der in Serie geschalteten Batteriezellen einstellbar ist und bei der der Kontroller ausgebildet ist, eine Ausgangsleistung eines jeden DC/DC-Umsetzers (12-1, 12-2) gesondert vorzugeben.

9. Ein Kraftfahrzeug mit einem elektrischen Antriebsmotor zum Antreiben des Kraftfahrzeuges und einem mit dem elektrischen Antriebsmotor verbundenen Batteriesystem nach einem der vorhergehenden Ansprüche.

## Claims

1. Battery system of a motor vehicle having a plurality of groups (11-1, 11-2) of series-connected battery cells and having a plurality of DC/DC converters (12-1, 12-2), which are connected on the input side to a first pole and to a second pole of a group (11-1, 11-2) of battery cells which is associated with the respective DC/DC converter (12-1, 12-2) and are connected in series on the output side between a first output of the battery system and a second output of the battery system, **characterized in that** the groups (11-1, 11-2) themselves are connected in series, and **in that** the battery system has a first switch (13), which is connected in a first current path between the first pole of a first group (11-2) of battery cells and the first output of the battery system, has a control input, which is connected to a controller, for a first control signal and is designed to connect the first pole of the first group (11-2) of battery cells to the first output of the battery system in response to the first control signal.

2. Battery system according to Claim 1, in which the outputs of the DC/DC converters (12-1, 12-2) are galvanically isolated from the outputs of the DC/DC converters (12-1, 12-2).

3. Battery system according to Claim 2, in which the DC/DC converters (12-1, 12-2) are in the form of flyback, half-bridge, full-bridge or transformer-based resonant converters.

4. Battery system according to one of the preceding claims, in which the DC/DC converters (12-1, 12-2) are designed to output a first output power, and in which the battery cells are designed to output a second output power, which is greater than the first output power, with the controller being designed to output the first control signal to the control input of the first switch (13) when a demanded total output power of the battery system is higher than the first output power.

5. Battery system according to one of the preceding claims, in which the DC/DC converters (12-1, 12-2) are designed to be unidirectional.

6. Battery system according to one of the preceding claims, having a first diode (14), which is connected in a second current path, which is in parallel with the first current path, and is connected in the forward-biased direction for a charging current for the battery cells.

7. Battery system according to Claim 6, in which the first current path has a second diode (15), which is connected in series with the first switch (13), and in which the second current path has a second switch (16), which is connected in series with the first diode (14), with the second diode (15) being connected in a forward-biased direction for a discharge current from the battery cells.

8. Battery system according to one of Claims 1 to 5, in which a total output voltage of the DC/DC converters (12-1, 12-2) which are connected in series on the output side can be set to be higher than a battery voltage of the series-connected battery cells, and in which the controller is designed to separately preset an output power of each DC/DC converter (12-1, 12-2).

9. Motor vehicle having an electric drive motor for driving the motor vehicle and having a battery system, which is connected to the electric drive motor, according to one of the preceding claims.

## Revendications

1. Système de batterie pour véhicule automobile, présentant plusieurs groupes (11-1, 11-2) de cellules de batterie raccordées en série et plusieurs convertisseurs courant continu-courant continu (12-1, 12-2) dont l'entrée est reliée à un premier pôle et à un deuxième pôle d'un groupe (11-1, 11-2) de cellules de batterie associé à un convertisseur courant continu-courant continu (12-1, 12-2) respectif et dont la sortie est raccordée en série entre une première sortie du système de batterie et une deuxième sortie du système de batterie,
**caractérisé en ce que**
les groupes (11-1, 11-2) sont eux-mêmes raccordés en série,
**en ce que** le système de batterie présente un premier commutateur (13) raccordé dans un premier parcours de courant entre le premier pôle d'un premier groupe (11-2) de cellules de batterie et la première sortie du système de batterie, qui présente une entrée de commande raccordée à un contrôleur pour un premier signal de commande et qui est configuré pour raccorder le premier pôle du premier groupe (11-2) de cellule de batterie à la première sortie du système de batterie sur le premier signal de commande.

2. Système de batterie selon la revendication 1, dans lequel les sorties des convertisseurs courant continu-courant continu (12-1, 12-2) sont isolés galvaniquement des sorties des convertisseurs courant continu-courant continu (12-1, 12-2).

3. Système de batterie selon la revendication 2, dans lequel les convertisseurs courant continu-courant continu (12-1, 12-2) sont configurés comme convertisseurs "flyback", à demi-pont, à pont complet ou comme convertisseurs à résonance basée sur transformateur.

4. Système de batterie selon l'une des revendications précédentes, dans lequel les convertisseurs courtant continu-courant continu (12-1, 12-2) sont configurés pour délivrer une première puissance de sortie et dans lequel les cellules de batterie sont configurées pour délivrer une deuxième puissance de sortie supérieure à la première puissance de sortie, le contrôleur étant configuré pour délivrer le premier signal de commande à l'entrée de commande du premier commutateur (13) lorsque la puissance de sortie totale demandée au système de batterie est supérieure à la première puissance de sortie.

5. Système de batterie selon l'une des revendications précédentes, dans lequel les convertisseurs courant continu-courant continu (12-1, 12-2) sont unidirectionnels.

6. Système de batterie selon l'une des revendications précédentes, présentant une première diode (14) raccordée dans un deuxième parcours de courant parallèle au premier parcours de courant et dans le sens du passage pour le courant de charge des cellules de batterie.

7. Système de batterie selon la revendication 6, dans lequel le premier parcours de courant présente une deuxième diode (15) raccordée en série avec le premier commutateur (13) et dans lequel le deuxième parcours de courant présente un deuxième commutateur (16) raccordé en série avec la première diode (14), la deuxième diode (15) étant raccordée dans le sens du passage du courant de décharge des cellules de batterie.

8. Système de batterie selon l'une des revendications 1 à 5, dans lequel la tension globale de sortie des convertisseurs courant continu-courant continu (12-1, 12-2) raccordés en série sur la sortie est supérieure à la tension de batterie des cellules raccordées en série et dans lequel le contrôleur est configuré pour définir séparément la puissance de sortie de chaque convertisseur courant continu-courant continu (12-1, 12-2).

9. Véhicule automobile doté d'un moteur électrique d'entraînement qui entraîne le véhicule automobile et d'un système de batterie selon l'une des revendications précédentes, raccordé au moteur électrique d'entraînement.
